# EUROPÄISCHE PATENTSCHRIFT

(11) **EP 4 652 392 B1**
(45) Veröffentlichungstag und Bekanntmachung des Hinweises auf die Patenterteilung: **30.09.2026**
(21) Anmeldenummer: 23814169.1
(22) Anmeldetag: 28.11.2023
(51) Int. Cl.: F16J 15/34

(54) **GLEITRINGDICHTUNGSANORDNUNG**
SLIDE-RING SEAL ASSEMBLY
ENSEMBLE JOINT À BAGUE COULISSANTE

(30) Priorität: 16.01.2023 DE 102023100830
(43) Veröffentlichungstag der Anmeldung: 26.11.2025
(73) Patentinhaber: EagleBurgmann Germany GmbH & Co. KG, 82515 Wolfratshausen (DE)
(72) Erfinder: MÜLLER, Michael, 83673 Bichl (DE)
(74) Vertreter: Hoefer & Partner Patentanwälte mbB
(86) Internationale Anmeldenummer: PCT/EP2023/083301
(87) Internationale Veröffentlichungsnummer: WO 2024/153376

(56) Entgegenhaltungen:
- EP-B1- 3 450 803
- DE-A1- 102018 000 935
- DE-A1- 102021 116 015
- US-A1- 2010 171 269

## Beschreibung

Die vorliegende Erfindung betrifft eine Gleitringdichtungsanordnung sowie eine Maschine mit einer erfindungsgemäßen Gleitringdichtungsanordnung, welche eine Zustandsüberwachung einer Gleitringdichtung ermöglicht.

Gleitringdichtungsanordnungen sind in unterschiedlichen Ausgestaltungen bekannt. Gleitringdichtungsanordnungen dichten dabei an einem rotierenden Bauteil, beispielsweise einer Welle, einer Maschine, z.B. einem Verdichter, einem Kompressor, einer Pumpe oder Rührwerken oder dgl., einen Produktraum von einer Atmosphäre ab. Hierbei müssen Gleitringdichtungsanordnungen häufig unter extremen Bedingungen, z.B. hohen Temperaturen, hohen Drücken und/oder toxischen Medien, eine Abdichtsaufgabe bewältigen. Um im Betrieb Komplikationen zu vermeiden, sollte die Gleitringdichtungsanordnung möglichst in allen Betriebssituationen abdichten können und gegebenenfalls vor einem Ausfall ausgetauscht werden, um außerplanmäßige Stillstände der Maschine bzw. eine Gefährdung von Mensch und Umwelt durch eine beschädigte Gleitringdichtung zu vermeiden. Schwierig ist hierbei festzustellen, wann ein Ausfall einer Gleitringdichtung droht.

Aus der DE 10 2021 116 015 A1 ist eine Gleitringdichtungsanordnung bekannt, wobei ein stationärer Gleitring zwei Elektroden aufweist und ein rotierender Gleitring aus einem elektrisch leitfähigen Material hergestellt ist. Hierbei wird eine Dicke eines Films eines Arbeitsfluids zwischen den Gleitflächen mittels dieses Aufbaus bestimmt. Zusätzlich ist noch ein Temperatursensor im stationären Gleitring angeordnet. Durch die Anordnung der Elektroden entsteht ein Kondensator, wobei eine erste Platte des Kondensators die Elektrode ist, eine zweite Platte des Kondensators der rotierende Dichtungsring ist, und ein Dielektrikum des Kondensators die Arbeitsflüssigkeit ist.

Es ist daher Aufgabe der vorliegenden Erfindung, eine Gleitringdichtungsanordnung sowie eine Maschine mit Gleitringdichtungsanordnung bereitzustellen, welche bei einfachem Aufbau und einfacher, kostengünstiger Herstellbarkeit eine möglichst sichere Zustandserfassung einer Gleitringdichtung ermöglicht.

Diese Aufgabe wird durch eine Gleitringdichtungsanordnung mit den Merkmalen des Anspruchs 1 und eine Maschine mit den Merkmalen des Anspruchs 14 gelöst. Die Unteransprüche zeigen jeweils bevorzugte Weiterbildungen der Erfindung.

Die erfindungsgemäße Gleitringdichtungsanordnung mit den Merkmalen des Anspruchs 1 weist den Vorteil auf, dass auf relativ einfache Weise eine Zustandserfassung einer Gleitringdichtung ermöglicht wird. Hierbei können insbesondere bauliche Veränderungen an der Gleitringdichtungsanordnung sehr gering gehalten werden, so dass eine Zustandsüberwachung auch bei bewährten Bauformen von Gleitringdichtungsanordnungen verwendet werden kann. Somit kann sichergestellt werden, dass durch die Zustandsüberwachung eine Performance einer Gleitringdichtungsanordnung nicht nachteilig beeinflusst wird.

Dies wird erfindungsgemäß dadurch erreicht, dass die Gleitringdichtungsanordnung eine Gleitringdichtung mit einem rotierenden und einem stationären Gleitring aufweist, welche zwischen ihren Gleitflächen einen Dichtspalt definieren. Dabei sind der stationäre und rotierende Gleitring aus einem elektrisch leitfähigen Material hergestellt. Der stationäre und rotierende Gleitring ist dabei vorzugsweise aus einem keramischen, elektrisch leitfähigen Verbundmaterial hergestellt. Weiterhin ist der rotierende Gleitring elektrisch mit einem rotierenden Bauteil, an welchem die Gleitringdichtungsanordnung abdichtet, direkt oder indirekt verbunden. Die Gleitringdichtungsanordnung umfasst dabei eine Überwachungseinrichtung mit einem elektrischen Stromkreis, einer Messeinheit und einer Auswerteeinheit. Der elektrische Stromkreis umfasst eine erste Leitung, welche den stationären Gleitring mit einer Spannungsquelle verbindet, eine zweite Leitung, welche das rotierende Bauteil mit der Spannungsquelle verbindet und einen Kondensator. Der Kondensator ist als Plattenkondensator ausgebildet, wobei der Plattenkondensator durch den rotierenden Gleitring und den stationären Gleitring ausgebildet ist. Somit bilden der rotierende und der stationäre Gleitring jeweils Kondensatorplatten des Plattenkondensators, so dass die beiden Gleitringe ein elektrisches Bauteil darstellen. Die Messeinheit ist eingerichtet, Änderungen von elektrischen Größen des Stromkreises zu erfassen und die Auswerteeinheit ist eingerichtet, eine Auswertung der durch die Messeinheit erfassten elektrischen Größen auszuführen.

Somit werden Bauteile des Gleitringdichtungsanordnung selbst als Teile des elektrischen Stromkreises der Überwachungseinrichtung verwendet, so dass eine Überwachung der Gleitringdichtungsanordnung mit einer sehr geringen Anzahl von zusätzlichen Bauteilen möglich ist. Somit kann ein besonders einfacher Aufbau realisiert werden und die Überwachungseinrichtung sehr kostengünstig ausgeführt sein. Auch ist durch die erfindungsgemäße Überwachungseinrichtung eine dauerhafte Überwachung des Zustands der Gleitringdichtungsanordnung im Betrieb problemlos möglich. Sollten sich Anzeichen von Änderungen der erfassten elektrischen Größen geben, kann frühzeitig ein möglicher Austausch der Gleitringdichtung oder anderer Bauteile der Gleitringdichtung oder anderer Bauteile der Gleitringdichtungsanordnung geplant werden, ohne dass es zu einem schwerwiegenden Störfall im Betrieb der Gleitringdichtungsanordnung kommt.

Vorzugsweise ist ein Sperrfluid, welches im Betrieb im Dichtspalt zwischen den Gleitflächen der Gleitringe befindlich ist, ein Dielektrikum. Dadurch kann der die Gleitringe umfassende Kondensator sehr einfach bereitgestellt werden.

Alternativ oder zusätzlich ist an wenigstens einer der Gleitflächen, vorzugsweise an beiden Gleitflächen, eine elektrisch nichtleitende Beschichtung ausgebildet. Die elektrisch nichtleitende Beschichtung isoliert die Gleitflächen des rotierenden und stationären Gleitrings elektrisch, so dass auch bei einem Stillstand oder geringen Drehzahlen der Gleitringdichtungsanordnung, bei dem sich die Gleitflächen der Gleitringe berühren, eine Zustandsaussage über die Gleitringdichtung gemacht werden kann. Sollte z.B. die elektrisch isolierende Beschichtung an den Gleitflächen aufgrund von Verschleiß abgetragen sein, würde sich bei einem Stillstand und einem Kontakt der Gleitflächen der elektrische Stromkreis der Überwachungseinrichtung an den Gleitflächen schließen, was unmittelbar auf einen Verschleiß der Beschichtungen der Gleitflächen hindeutet. Dann können entsprechend Gegenmaßnahmen, beispielsweise ein Austausch der Gleitringe, vorgenommen werden.

Die elektrisch nichtleitende Beschichtung an den Gleitflächen ist vorzugsweise eine DLC-Beschichtung (Diamond Like Carbon-Beschichtung).

Um den stationären Gleitring gegenüber einem Gehäuse elektrisch zu isolieren, ist vorzugsweise zwischen dem stationären Gleitring und dem Gehäuse ein elektrisch nichtleitendes Element vorhanden. Hierbei kann beispielsweise wiederum am Gehäuse und/oder am stationären Gleitring eine elektrisch nichtleitende Beschichtung, beispielsweise eine DLC-Beschichtung, vorgesehen sein.

Gemäß einer weiteren bevorzugten Ausgestaltung der Erfindung umfasst die Gleitringdichtungsanordnung ferner eine Drehmomentübertragungsvorrichtung am stationären Gleitring, welche gegenüber dem stationären Gleitring und/oder gegenüber dem Gehäuse elektrisch isoliert ist. Die Drehmomentübertragungsvorrichtung ist dabei eingerichtet, ein Mitdrehen des stationären Gleitrings im Betrieb zu verhindern. Die Drehmomentübertragungsvorrichtung ist beispielsweise ein Drehmomentstift, welcher an einem Ende im Gehäuse fixiert ist und am anderen Ende den stationären Gleitring drehfest hält. Hierbei kann der Stift am stationären Gleitring beispielsweise in einer Nut am Außenumfang angeordnet sein oder in einer Sacklochbohrung im Gleitring angeordnet sein.

Der Stift weist besonders bevorzugt eine Kappe aus einem elektrisch nichtleitfähigen Material, insbesondere PEEK, auf, um die elektrische Isolation zwischen stationärem Gleitring und Gehäuse sicherzustellen.

Weiter bevorzugt umfasst die Gleitringdichtungsanordnung ferner eine Vorspanneinrichtung und einen Druckring, welche an einer Rückseite des stationären Gleitrings angeordnet sind. Die Vorspanneinrichtung spannt den stationären Gleitring in Axialrichtung X-X gegen den rotierenden Gleitring vor, wobei die Vorspanneinrichtung gegenüber dem stationären Gleitring ebenfalls elektrisch isoliert ist. Dies kann auf einfache Weise derart ermöglicht werden, dass der Druckring aus einem elektrisch nichtleitenden Material hergestellt ist oder eine Beschichtung aus einem elektrisch nichtleitenden Material an einer Rückseite des stationären Gleitrings oder dem Druckring vorgesehen ist.

Eine besonders bevorzugte Ausgestaltung der Erfindung ist gegeben, wenn der stationäre Gleitring vollständig an allen Außenflächen eine elektrisch nichtleitfähige Beschichtung aufweist. Eine elektrische Kontaktierung des stationären Gleitrings mittels der ersten Leitung muss dann durch eine in der Beschichtung ausgebildete Öffnung erfolgen.

Besonders bevorzugt ist die Auswerteeinheit eingerichtet, Messgrößen des elektrischen Stromkreises, welche durch die Messeinheit gemessen wurden, einem Vergleich mit Vergleichsgrößen zu unterziehen, um Abweichungen festzustellen. Jedenfalls kann dann eine Warnmeldung oder dgl. ausgegeben werden. Vergleichsgrößen sind beispielsweise vorangegangene Messgrößen, die durch die Messeinheit aufgenommen wurden und/oder vorgegebene Vergleichsgrößen aus Versuchen, welche in einem Speicher abgespeichert sind.

Besonders bevorzugt ist die Auswerteeinheit eingerichtet, anhand der erfassten elektrischen Messgrößen eine Höhe des Dichtspalts in Axialrichtung X-X der Gleitringdichtung zu bestimmen. Hierdurch kann auf einfache Weise eine mögliche Leckage über den Dichtspalt der Gleitringdichtung erfasst werden.

Vorzugsweise ist die Auswerteeinheit eingerichtet, einen Verschleiß der Gleitflächen der Gleitringe und/oder einen Verschleiß der Drehmomentübertragungsvorrichtung zu bestimmen.

Weiter bevorzugt umfasst die Gleitringdichtungsanordnung ferner einen Temperatursensor, welcher mit der Auswerteeinheit verbunden ist und eingerichtet ist, eine Temperatur wenigstens eines Gleitrings zu erfassen. Durch den zusätzlichen Temperatursensor ist eine weitere Überwachungsmöglichkeit der Gleitringe gegeben.

Weiter bevorzugt ist die Auswerteeinheit eingerichtet, basierend auf der durch den Temperatursensor erfassten Temperaturänderung eine Änderung einer Dichtspalthöhe zu bestimmen. Insbesondere ergibt sich eine sprunghafte Temperaturänderung, wenn im Betrieb einer Maschine sich die Gleitflächen berühren. Dies führt zu einer Kontaktreibung zwischen den Gleitflächen, was in einer Temperaturerhöhung der Gleitringe resultiert. Dies kann durch den Temperatursensor erfasst werden und die Auswerteeinheit entsprechend ein Warnsignal abgeben.

Die Kenntnis über ein Berühren der Gleitflächen ist beispielsweise bei einem Herunterfahren von großen Maschinen wie großen Verdichtern, Turbinen oder dgl. wichtig, welche aus thermischen Gründen über einen längeren Zeitraum in einem Langsamlauf, sog. Slow-Roll-Betrieb, gefahren werden müssen. Hier ist es vorteilhaft, wenn die Drehzahl für einen derartigen Langsamlauf möglichst nahe an eine Drehzahl herangeführt werden kann, bei der ein Kontakt zwischen den Gleitflächen auftreten könnte. Hierbei muss unbedingt verhindert werden, dass beim Langsamlauf die Gleitflächen über einen längeren Zeitraum in Kontakt bleiben, da dies zu einer Zerstörung der Gleitringdichtung führen würde.

Ein Temperatursprung tritt auch bei einem Anfahren einer Maschine auf, nämlich ab dem drehzahlabhängigen Zeitpunkt, bei dem ein Abheben der Gleitflächen, die im Stillstand miteinander in Kontakt sind, auftritt. Dann ergibt sich aufgrund des entstehenden Dichtspalts zwischen den Gleitflächen eine Temperaturabsenkung der Gleitringe, da keine Kontaktreibung zwischen den Gleitflächen mehr vorhanden ist. Weiter kann ein Langsamlauf auch bei einem Stand-by-Betrieb einer Maschine notwendig sein, um ein schnelleres Hochfahren der Maschine zu ermöglichen.

Somit kann insbesondere wenn die Gleitflächen elektrisch nichtleitende Beschichtungen aufweisen, durch die Auswertung der Messwerte des Temperatursensors unmittelbar ein Rückschluss auf eine Dichtspalthöhe und/oder das Vorhandensein einer Kontaktreibung zwischen den Gleitflächen ermöglicht werden, wodurch eine Steuerung der Maschine im Langsamlauf bei einer Drehzahl möglich ist, welche knapp über einer Drehzahl liegt, bei der ein Kontakt an den Gleitflächen der Gleitringdichtung auftreten würde.

Um eine möglichst genaue und schnelle Erfassung einer Temperatur der Gleitringe zu ermöglichen, ist der Temperatursensor vorzugsweise direkt am stationären Gleitring angeordnet. Vorzugsweise ist der Temperatursensor in einer Sacklochbohrung im stationären Gleitring positioniert.

Ferner betrifft die vorliegende Erfindung eine Maschine, beispielsweise einen Turboverdichter, einen Kompressor, eine Pumpe oder ein Rührwerk, mit einer erfindungsgemäßen Gleitringdichtungsanordnung, welche an einem rotierenden Bauteil wie z.B. einer Welle, einen Produktraum gegenüber einer Atmosphäre abdichtet. Die Maschine umfasst dabei eine Steuereinheit, welche eingerichtet ist, eine Steuerung der Maschine vorzunehmen. Die Auswerteeinheit der Gleitringdichtungsanordnung ist dabei eingerichtet, von der Steuereinheit der Maschine weitere Betriebsgrößen der Maschine, insbesondere eine Drehzahl der Maschine, einen Druck des abzudichtenden Mediums und/oder eine Temperatur des abzudichtenden Mediums und/oder eine gesamte Laufzeitdauer der Maschine seit Einbau der Gleitringdichtung zu empfangen. Die Auswerteeinheit ist dabei eingerichtet, die erfassten Größen der Messeinheit in Verbindung mit den empfangenen Größen der Steuereinheit zu verarbeiten, um eine Aussage über einen Verschleißzustand der Gleitringdichtungsanordnung zu machen. Weiter bevorzugt ist die Auswerteeinheit eingerichtet, die durch die Messeinheit erfassten Messgrößen zur Steuereinheit der Maschine zu übertragen.

Nachfolgend werden bevorzugte Ausführungsbeispiele der Erfindung unter Bezugnahme auf die begleitende Zeichnung im Detail beschrieben. In der Zeichnung ist:
- Fig. 1: eine schematische Schnittansicht einer Maschine mit einer Gleitringdichtungsanordnung gemäß einem ersten Ausführungsbeispiel der Erfindung,
- Fig. 2: eine schematische Schnittansicht einer Maschine mit einer Gleitringdichtungsanordnung gemäß einem zweiten Ausführungsbeispiel der Erfindung, und
- Fig. 3: eine schematische Schnittansicht einer Maschine mit einer Gleitringdichtungsanordnung gemäß einem dritten Ausführungsbeispiel der Erfindung.

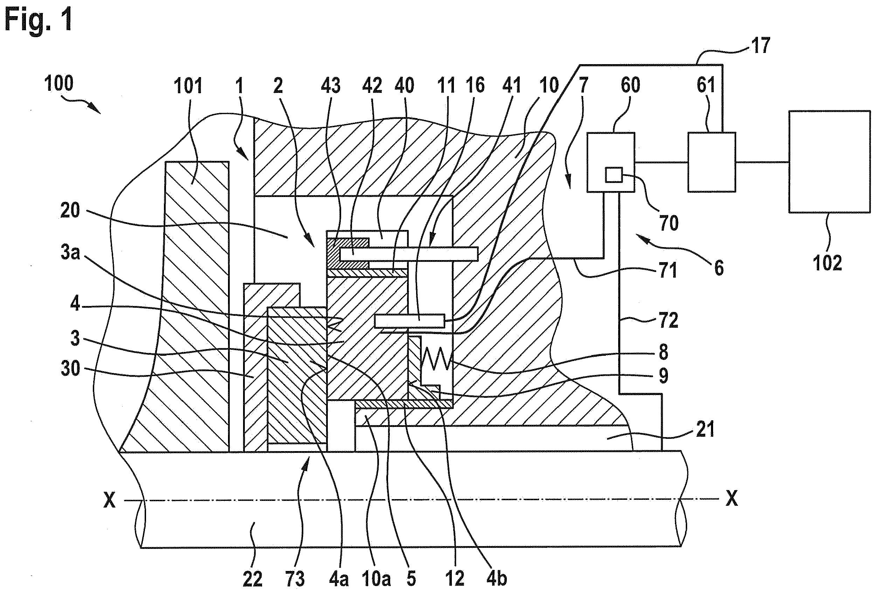

Nachfolgend wird unter Bezugnahme auf Fig. 1 eine Maschine 100 mit einer erfindungsgemäßen Gleitringdichtungsanordnung 1 im Detail beschrieben.

Die Maschine 100 ist ein Verdichter mit Verdichterschaufeln 101, wobei die Gleitringdichtungsanordnung 1 einen Produktbereich 20 von einem Atmosphärenbereich 21 an einer rotierenden Welle 22 abdichtet.

Wie aus Fig. 1 ersichtlich ist, umfasst die Gleitringdichtungsanordnung 1 eine Gleitringdichtung 2 mit einem rotierenden Gleitring 3 und einem stationären Gleitring 4. Zwischen einer Gleitfläche 3a des rotierenden Gleitrings 3 und einer Gleitfläche 4a des stationären Gleitrings 4 ist ein Dichtspalt 5 definiert.

Der rotierende Gleitring 3 ist hierbei mittels eines Gleitringträgers 30 mit der rotierenden Welle 22 verbunden und dreht sich mit dieser.

Der stationäre Gleitring 4 ist an einem Gehäuse 10 angeordnet und axial beweglich vorgesehen. Hierbei ist eine Vorspanneinrichtung 8, welche über einen Druckring 9 an einer Rückseite 4b des stationären Gleitrings 4 angreift, vorgesehen, so dass der stationäre Gleitring 4 in Axialrichtung X-X der Gleitringdichtung 2 gegen den rotierenden Gleitring 3 vorgespannt ist.

Zur Vermeidung eines Mitdrehens des stationären Gleitrings 4 mit dem rotierenden Gleitring 3 im Betrieb ist eine Drehmomentübertragungsvorrichtung 41 vorgesehen. Die Drehmomentübertragungsvorrichtung 41 umfasst einen Stift 42 und eine Kappe 43. Die Kappe 43 ist aus einem elektrisch nichtleitenden Material, vorzugsweise PEEK, hergestellt. Die Drehmomentübertragungsvorrichtung 41 ist dabei in einer Nut 40, welche an einem Außenumfang des stationären Gleitrings 4 vorgesehen ist, angeordnet. Das andere freie Ende des Stiftes 42 der Drehmomentübertragungsvorrichtung 41 ist im Gehäuse 10 fixiert. Es sei angemerkt, dass entlang des Umfangs des stationären Gleitrings 4 mehrere derartige Stifte in entsprechend gebildeten Nuten im stationären Gleitring angeordnet sind, um ein Mitdrehen des stationären Gleitrings 4 im Betrieb der Maschine zu verhindern.

Der rotierende Gleitring 3 und der stationäre Gleitring 4 sind jeweils aus elektrisch leitfähigen Materialen hergestellt. Vorzugsweise sind die Gleitringe aus einer elektrisch leitfähigen Keramik, hergestellt.

Die Gleitringdichtungsanordnung 1 umfasst ferner eine Überwachungseinrichtung 6. Die Überwachungseinrichtung 6 weist einen elektrischen Stromkreis 7, eine Messeinheit 60 und eine Auswerteeinheit 61 auf.

Der elektrische Stromkreis 7 umfasst eine Spannungsquelle 70, eine erste Leitung 71, welche die Spannungsquelle 70 elektrisch mit dem stationären Gleitring 4 verbindet, eine zweite Leitung 72, welche die Welle 22 elektrisch mit der Spannungsquelle 70 verbindet und einen Kondensator 73.

Der Kondensator 73 ist als Plattenkondensator ausgebildet, wobei der Plattenkondensator ausschließlich durch den rotierenden Gleitring 3 und den stationären Gleitring 4, welche aus einem elektrisch leitfähigen Material hergestellt sind, ausgebildet ist. Im Betrieb der Maschine, wenn sich der Dichtspalt 5 zwischen dem rotierenden Gleitring 3 und dem stationären Gleitring 4 ausbildet, bildet ein Sperrfluid, welches sich im Dichtspalt 5 befindet, ein Dielektrikum des Plattenkondensators. Dadurch sind der elektrisch leitfähige rotierende Gleitring 3 und der elektrisch leitfähige stationäre Gleitring 4 elektrisch voneinander getrennt. In diesem Ausführungsbeispiel ist das Dielektrikum Luft. Im Stillstand der Maschine 100 wird durch die Vorspanneinrichtung 8 der stationäre Gleitring 4 in Richtung auf den rotierenden Gleitring 3 vorgespannt, so dass sich die Gleitflächen 3a, 4a der beiden Gleitringe berühren. Dadurch ist der elektrische Stromkreis 7 geschlossen.

Wie aus Fig. 1 ersichtlich ist, ist die erste Leitung 71, welche elektrisch isoliert ist, durch das Gehäuse 10 bis in eine von der Rückseite 4b im stationären Gleitring ausgebildete Öffnung in einen Innenbereich des stationären Gleitrings 4 geführt. Somit kann eine sichere elektrische Kontaktierung des stationären Gleitrings 4 durch die erste Leitung 71, welche dann selbstverständlich im stationären Gleitring 4 nicht mehr elektrisch isoliert ist, ermöglicht werden.

Ausgehenden vom rotierenden Gleitring 3 ist der elektrische Stromkreis 7 dann über den Gleitringträger 30, die Welle 22, welche aus einem Metall hergestellt ist und ebenfalls elektrisch leitfähig ist und der zweiten Leitung 72, die zur Spannungsquelle 70 zurückführt, geschlossen.

Die Messeinheit 60 ist nun eingerichtet, Änderungen von elektrischen Größen des Stromkreises 7 zu erfassen. Wenn beispielsweise ein Verschleiß an den Gleitflächen vorhanden ist, ändert sich üblicherweise eine Dichtspalthöhe des Dichtspalts 5 in Axialrichtung X-X. Dadurch ändert sich eine Kapazität des durch die Gleitringe ausgebildeten Kondensators 73, was entsprechend von der Messeinheit 60 erfasst werden kann.

Die erfassten elektrischen Messgrößen werden der Auswerteeinheit 61 zugeführt, welche dann ein Vergleich mit beispielsweise vorhergehenden Messgrößen, die durch die Messeinheit 60 erfasst wurden, ausführen kann und/oder auch einen Vergleich mit vorgegebenen Vergleichsgrößen ausführen kann. Abhängig vom Vergleich kann dann beispielsweise eine Warnmeldung bei erkanntem Verschleiß an den Gleitflächen ausgegeben werden.

Die Auswerteeinheit 60 ist ferner mit einer Steuereinheit 102 der Maschine 100 verbunden. Hierdurch kann ein Datenaustausch mit der Auswerteeinheit 61 und der Steuereinheit 102 erfolgen. Beispielsweise kann bei Erkennen eines Verschleißes an den Gleitflächen die Steuereinheit 102 derart eingerichtet sein, dass entsprechende Anpassung von Betriebsparametern der Maschine 100, beispielsweise eine Reduzierung einer Drehzahl, ausgeführt werden, um eine vollständige Beschädigung der Gleitringdichtung 2 zu verhindern. Gegebenenfalls kann auch ein vollständiger Stillstand der Maschine 100 angeordnet werden.

Durch die Verbindung zwischen der Steuereinheit 102 und der Auswerteeinheit 61 kann die Steuereinheit 102 der Auswerteeinheit 61 auch Betriebsdaten, beispielsweise Drehzahl der Welle 102, Temperatur des Mediums im Produktbereich 20, Druck im Produktbereich 20 und/oder eine Gesamtlaufzeit der Maschine 100 übertragen werden, wobei die Auswerteeinheit 61 dann eine Auswertung basierend auf den erfassten elektrischen Größen und den Betriebsgrößen, die durch die Steuereinheit 102 zugeführt wurden, ausführen kann.

Der stationäre Gleitring 4 ist zur elektrischen Isolation an der Nut 40, in welcher die Drehmomentübertragungsvorrichtung 41 angeordnet ist, mit einer ersten elektrisch nicht leitfähigen Beschichtung 11 ausgebildet. Eine zweite elektrisch nicht leitfähige Beschichtung 12 ist an dem Gehäuse 10 an einem hülsenartigen Vorsprung 10a, in dem der stationäre Gleitring 4 axial beweglich angeordnet ist, vorgesehen. Dadurch ist der stationäre Gleitring 4 elektrisch von den anderen Bauteilen, insbesondere dem Gehäuse 10, und der Drehmomentübertragungsvorrichtung 41 sicher elektrisch isoliert. Sollte ein Verschleiß an der ersten und/oder zweiten Beschichtung 11, 12 auftreten, würde dies ebenfalls zu einer Änderung von elektrischen Größen des elektrischen Stromkreises 7 führen, was durch die Messeinheit 60 und entsprechend die Auswerteeinheit 61 erfasst werden kann.

Weiterhin umfasst die Gleitringdichtungsanordnung 1 einen Temperatursensor 16. Der Temperatursensor 16 ist in einem im stationären Gleitring 4 ausgebildeten Sackloch angeordnet und über eine Verbindungsleitung 17 mit der Auswerteeinheit 61 verbunden.

Der Temperatursensor 16 ist eingerichtet, eine Temperatur des stationären Gleitrings zu erfassen. Im Normalbetrieb der Gleitringdichtungsanordnung, d.h., wenn zwischen den Gleitflächen 3a, 4a der Gleitringe der Dichtspalt 5 ausgebildet ist, ist eine Temperatur der Gleitringe üblicherweise auf einem vorbestimmten Niveau konstant. Sollte im Betrieb ein längerer Kontakt an den Gleitflächen 3a, 4a der Gleitringe auftreten, ergibt sich eine Kontaktreibung, was zu einem sprunghaften Temperaturanstieg an den Gleitflächen und entsprechend den Gleitringen führt. Dieser Temperaturanstieg kann durch den Temperatursensor 16 erfasst werden und in der Auswerteeinheit verarbeitet werden. Hierbei ist die Auswerteeinheit eingerichtet, basierend auf der Temperaturänderung eine Änderung der Dichtspalthöhe an den Gleitflächen zu bestimmen.

Die Auswerteeinheit 61 kann somit im Betrieb durch den Temperaturanstieg darauf schließen, dass Kontakte an den Gleitflächen, welche zu einer erhöhten Kontaktreibung und damit einer Temperaturerhöhung führen, vorgelegen haben müssen, und entsprechende Gegenmaßnahmen ergreifen. Auch kann bei einem Langsamlauf die Auswerteeinheit basierend auf einer Temperaturänderung relativ genau eine Drehzahl bestimmen, bei der die Gleitringdichtung noch gerade nicht an den Gleitflächen in Kontakt ist. Da derartige Langsamläufe häufig über mehrere Stunden oder Tage dauern, sollte ein Langsamlauf möglichst mit geringen Drehzahlen durchgeführt werden, allerdings darf die Drehzahl nicht zu klein sein, so dass im Langsamlauf ein Kontakt an den Gleitflächen auftritt, welcher die Gleitringdichtung beschädigen würde. Somit kann durch die zusätzliche Verwendung des Temperatursensors ein Langsamlauf optimiert werden.

Auch bei einem Anfahren der Maschine kann ein längerer Langsamlauf notwendig sein, wobei sichergestellt werden muss, dass auch im Anfahrzustand dann eine Drehzahl gewählt wird, bei der die Gleitflächen der Gleitringe voneinander abheben und sich der Dichtspalt zwischen den Gleitringen ausbildet. Erst dann kann der Langsamlauf ohne Beschädigung der Gleitringdichtung durchgeführt werden.

Weiterhin kann durch den Temperatursensor eine redundante Erfassung eines Kontaktes der Gleitflächen ermöglicht werden, da bei einem Kontakt an den Gleitflächen, wie oben beschrieben, der elektrische Stromkreis der Überwachungseinrichtung 6 geschlossen wird, was sofort durch die Messeinheit 60 erfasst wird. Redundant dazu ergibt sich bei einem Kontakt an den Gleitflächen auch eine sprunghafte Temperaturerhöhung an den Gleitringen, was durch den Temperatursensor 16 erfasst werden kann. Somit ist eine redundante Erfassung von Kontakten an den Gleitflächen der Gleitringe möglich.

Somit kann erfindungsgemäße eine einfach aufgebaute Überwachungseinrichtung 6 realisiert werden, welche Aussagen über einen Zustand der Gleitringdichtungsanordnung 1 ermöglicht. Die Überwachungseinrichtung 6 ist dabei extrem robust, so dass die Überwachungseinrichtung 6 insbesondere auch bei Gleitringdichtungsanordnungen 1 verwendet werden kann, welche unter extremen Bedingungen eine Dichtungsaufgabe erfüllen müssen. Insbesondere kann auf empfindliche Messgeräte verzichtet werden. Die Messeinheit 60 und die Auswerteeinheit 61 können entfernt vom Produktbereich 20 angeordnet werden und können beispielsweise in entsprechenden Schutzgehäusen oder dgl. angeordnet werden. Weiterhin ist es möglich, dass bewährte Baueinheiten von Gleitringdichtungsanordnungen ohne Änderung übernommen werden können, insbesondere die Drehmomentübertragungsvorrichtung 41 und die Vorspanneinrichtung.

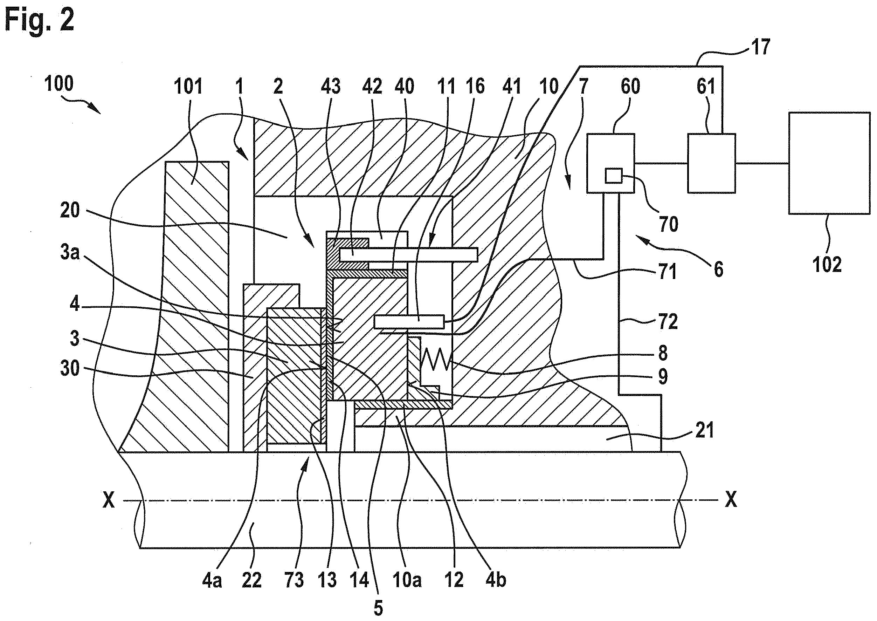

Fig. 2 zeigt eine Maschine 100 und eine Gleitringdichtungsanordnung 1 gemäß einem zweiten bevorzugten Ausführungsbeispiel der Erfindung. Gleiche bzw. funktional gleiche Teile sind mit den gleichen Bezugszeichen wie im ersten Ausführungsbeispiel bezeichnet.

Beim zweiten Ausführungsbeispiel ist an der Gleitfläche 3a des rotierenden Gleitrings 3 eine dritte Beschichtung 13 und an der Gleitfläche 4a des stationären Gleitrings 4 eine vierte Beschichtung 14 ausgebildet. Die beiden Beschichtungen 13, 14 sind aus einem elektrisch nicht leitfähigen Material, beispielsweise DLC, hergestellt. Hierdurch ergibt sich im Vergleich mit dem ersten Ausführungsbeispiel beim zweiten Ausführungsbeispiel eine Änderung betreffend den elektrischen Stromkreis 7 derart, dass bei einem Stillstand der Maschine, wenn sich die Gleitflächen 3a, 4a der Gleitringe berühren, der elektrische Stromkreis 7 nicht geschlossen wird. Dies kann durch die Messeinheit 6 erfasst werden. Sollte ein Verschleiß an den Gleitflächen auftreten, so dass die Beschichtungen 13, 14 verschlissen sind, würde bei einem Kontakt zwischen den Gleitflächen der elektrische Stromkreis 7 geschlossen werden, was unmittelbar durch die Messeinheit 60 und die Auswerteeinheit 61 erfasst werden kann.

Hierbei sei angemerkt, dass im Betrieb ein Kontakt der Gleitringe nicht nur bei einem Stillstand der Maschine 100 auftreten kann, sondern auch bei einer reduzierten Drehzahl, beispielsweise für eine Richtungsumkehr einer Drehrichtung der Welle 22 oder einem Langsamlauf. Ein Verschleiß an den Gleitflächen kann beispielsweise auch dann erfasst werden, wenn bei Betriebsdrehzahlen, bei denen mit intakter Beschichtung 13, 14 kein Kontakt auftreten kann, durch den geschlossenen elektrischen Stromkreis 7 trotzdem ein Kontakt erfasst wird.

Es sei angemerkt, dass der Verschleiß selbstverständlich auch dann erfasst werden kann, wenn nur eine der beiden Gleitflächen eine elektrisch nicht leitfähige Beschichtung aufweist.

Durch das Vorsehen des Temperatursensors 16 kann jedoch trotz der elektrisch nichtleitenden Beschichtungen an den Gleitflächen ein Kontakt an den Gleitflächen der Gleitringdichtung erfasst werden, wenn in einem Langsamlauf durch den Kontakt an den Gleitflächen sich eine Kontaktreibung ergibt, die zu einer Temperaturerhöhung des Gleitrings führt. Der Temperatursensor 16 kann die Temperaturerhöhung am stationären Gleitring 4 erfassen und die Auswerteeinheit 61 entsprechend basierend auf der Temperaturänderung auf einen Kontakt an den Gleitflächen schließen und eine Aussage hinsichtlich einer Dichtspalthöhe geben.

Ansonsten entspricht dieses Ausführungsbeispiel dem ersten Ausführungsbeispiel, so dass auf die dort gegebene Beschreibung verwiesen werden kann.

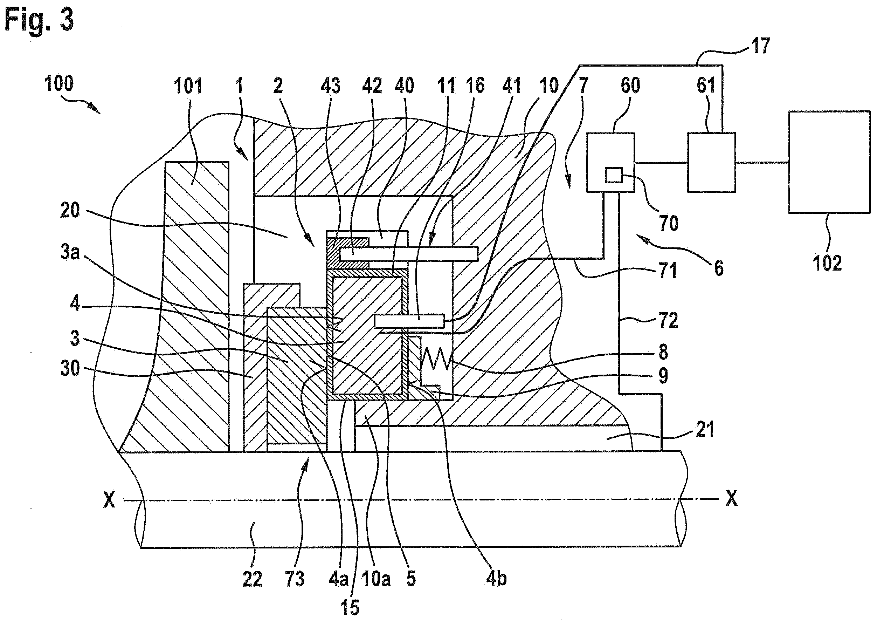

Fig. 3 zeigt eine Maschine 100 mit einer Gleitringdichtungsanordnung 1 gemäß einem dritten bevorzugten Ausführungsbeispiel der Erfindung. Gleiche bzw. funktional gleiche Teile sind wieder mit den gleichen Bezugszeichen wie im vorhergehenden Ausführungsbeispiel bezeichnet.

Wie aus Fig. 3 ersichtlich ist, ist beim dritten Ausführungsbeispiel der stationäre Gleitring 4 derart ausgebildet, dass an allen Außenflächen des stationären Gleitrings 4 eine Beschichtung 15 ausgebildet ist. Die Beschichtung 15 ist wieder aus einem elektrisch nicht leitfähigen Material hergestellt. Die Beschichtung 15 ist somit an der Gleitfläche 4a des stationären Gleitrings, an der Rückseite 4b, an einer inneren Umfangsseite und an einer äußeren Umfangsseite vorgesehen. Somit ist der stationäre Gleitring 4 durch die Beschichtung 15 vollständig elektrisch isoliert. Im Betrieb kann dann bei einem Verschleiß der Beschichtung 15, insbesondere an der Gleitfläche 4, wie im zweiten Ausführungsbeispiel auf Verschleiß geschlossen werden, wenn der elektrische Stromkreis geschlossen ist. Auch kann bei einem Verschleiß am inneren Umfang bzw. am äußeren Umfang dieser erfasst werden, da dann gegebenenfalls ein Kurzschluss über das Gehäuse 10 auftritt. Die elektrisch nicht leitfähige Beschichtung 15 kann dabei in einem Schritt auf den stationären Gleitring 4 aufgebracht werden, so dass die Überwachungseinrichtung 6 besonders kostengünstig bereitgestellt werden kann.

Auch kann durch den Temperatursensor 16 aufgrund einer sprunghaften Temperaturänderung am stationären Gleitring 4 wieder auf einen Kontakt an den Gleitflächen geschlossen werden.

Durch die vollständige elektrische Rundum-Isolierung des stationären Gleitrings 4 müssen keine anderen elektrischen Isolationen an der Gleitringdichtungsanordnung 1 vorgesehen werden. Dadurch können bewährte Bauteile der Gleitringdichtungsanordnung 1 ohne Änderung verwendet werden. Ansonsten entspricht das dritte Ausführungsbeispiel den vorhergehenden Ausführungsbeispielen, so dass auf die dort gegebene Beschreibung verwiesen werden kann.

### Bezugszeichenliste

- 1: Gleitringdichtungsanordnung
- 2: Gleitringdichtung
- 3: rotierender Gleitring
- 3a: Gleitfläche des rotierenden Gleitrings
- 4: stationärer Gleitring
- 4a: Gleitfläche des stationären Gleitrings
- 4b: Rückseite des stationären Gleitrings
- 5: Dichtspalt
- 6: Überwachungseinrichtung
- 7: elektrischer Stromkreis
- 8: Vorspanneinrichtung
- 9: Druckring
- 10: Gehäuse
- 10a: hülsenartiger Vorsprung des Gehäuses
- 11: erste elektrisch nicht leitfähige Beschichtung
- 12: zweite elektrisch nicht leitfähige Beschichtung
- 13: dritte elektrisch nicht leitfähige Beschichtung
- 14: vierte elektrisch nicht leitfähige Beschichtung
- 15: elektrisch nicht leitfähige Beschichtung an allen Außenflächen des stationären Gleitrings
- 16: Temperatursensor
- 17: Verbindungsleitung
- 20: Produktbereich
- 21: Atmosphärenbereich
- 22: Welle
- 30: Gleitringträger
- 40: Nut
- 41: Drehmomentübertragungsvorrichtung
- 42: Stift
- 43: Kappe
- 60: Messeinheit
- 61: Auswerteeinheit
- 70: Spannungsquelle
- 71: erste Leitung
- 72: zweite Leitung
- 73: Kondensator
- 100: Maschine
- 101: Verdichterschaufel
- 102: Steuereinheit der Maschine
- X-X: Axialrichtung

## Patentansprüche

1. Gleitringdichtungsanordnung, eingerichtet zur Abdichtung an einem rotierenden Bauteil (22), umfassend:
- eine Gleitringdichtung (2) mit einem rotierenden Gleitring (3) mit einer Gleitfläche (3a) und einem stationären Gleitring (4) mit einer Gleitfläche (4a), welche zwischen den Gleitflächen (3a, 4a) einen Dichtspalt (5) definieren,
- wobei der rotierende Gleitring (3) und der stationäre Gleitring (4) aus einem elektrisch leitfähigen Material hergestellt sind,
- wobei der rotierende Gleitring (3) elektrisch mit dem rotierenden Bauteil (22) verbunden ist, und
- eine Überwachungseinrichtung (6) mit einem elektrischen Stromkreis (7), einer Messeinheit (60) und einer Auswerteeinheit (61),
- wobei der elektrische Stromkreis (7) eine erste Leitung (71), welche den stationären Gleitring (4) elektrisch mit einer Spannungsquelle (70) verbindet, eine zweite Leitung (72), welche das rotierende Bauteil (22) elektrisch mit der Spannungsquelle (70) verbindet, und einen Kondensator (73) umfasst,
- wobei der Kondensator (73) als Plattenkondensator ausgebildet ist, wobei der Plattenkondensator durch den rotierenden Gleitring (3) und den stationären Gleitring (4) ausgebildet ist,
- wobei die Messeinheit (60) eingerichtet ist, Änderungen von elektrischen Größen des elektrischen Stromkreises (7) zu erfassen, und
- wobei die Auswerteeinheit (61) eingerichtet ist, eine Auswertung der durch die Messeinheit (60) erfassten elektrischen Größen auszuführen.

2. Gleitringdichtungsanordnung nach Anspruch 1, wobei ein Sperrfluid im Dichtspalt (5) ein Dielektrikum ist.

3. Gleitringdichtungsanordnung nach einem der vorhergehenden Ansprüche, wobei wenigstens eine der Gleitflächen (3a, 4a) der Gleitringe (3, 4) eine elektrisch nichtleitende Beschichtung (13, 14; 15) aufweist.

4. Gleitringdichtungsanordnung nach einem der vorhergehenden Ansprüche, wobei zwischen dem stationären Gleitring (4) und einem Gehäuse (10) zur elektrischen Isolierung ein elektrisch nichtleitendes Element angeordnet ist.

5. Gleitringdichtungsanordnung nach Anspruch 4, wobei das elektrisch nichtleitende Element eine elektrisch nichtleitende Beschichtung (12) ist.

6. Gleitringdichtungsanordnung nach einem der vorhergehenden Ansprüche, ferner umfassend eine Drehmomentübertragungsvorrichtung (41), welche zwischen dem stationären Gleitring (4) und dem Gehäuse (10) angeordnet ist, wobei die Drehmomentübertragungsvorrichtung (41) gegenüber dem stationären Gleitring (4) und/oder gegenüber dem Gehäuse (10) elektrisch isoliert ist.

7. Gleitringdichtungsanordnung nach einem der vorhergehenden Ansprüche, ferner umfassend eine Vorspanneinrichtung (8) und einen Druckring (9), welche an einer Rückseite (4b) des stationären Gleitrings (4) angeordnet sind, wobei die Vorspanneinrichtung (8) den stationären Gleitring (4) in Axialrichtung (X-X) vorspannt, und wobei der Druckring (9) aus einem elektrisch nichtleitenden Material hergestellt ist, um die Vorspanneinrichtung (8) gegenüber dem stationären Gleitring (4) elektrisch zu isolieren.

8. Gleitringdichtungsanordnung nach einem der vorhergehenden Ansprüche, wobei der stationäre Gleitring (4) vollständig an allen Außenflächen eine elektrisch nicht leitfähige Beschichtung (15) aufweist.

9. Gleitringdichtungsanordnung nach einem der vorhergehenden Ansprüche, wobei die Auswerteeinheit (61) ferner eingerichtet ist, durch einen Vergleich der von der Messeinheit (60) erfassten elektrischen Messgrößen mit Vergleichsgrößen Abweichungen festzustellen.

10. Gleitringdichtungsanordnung nach einem der vorhergehenden Ansprüche, wobei die Auswerteeinheit (61) ferner eingerichtet ist, anhand der erfassten elektrischen Messgrößen der Messeinheit (60) im Betrieb eine Höhe des Dichtspalts (5) in Axialrichtung (X-X) zu bestimmen.

11. Gleitringdichtungsanordnung nach einem der vorhergehenden Ansprüche, ferner umfassend einen Temperatursensor (16), welcher mit der Auswerteeinheit (61) verbunden ist und eingerichtet ist, eine Temperatur wenigstens eines Gleitrings zu erfassen.

12. Gleitringdichtungsanordnung nach Anspruch 11, wobei die Auswerteeinheit (61) eingerichtet ist, basierend auf einer Temperaturänderung des Gleitrings eine Änderung einer Dichtspalthöhe zwischen den Gleitflächen zu bestimmen.

13. Gleitringdichtungsanordnung nach Anspruch 11 oder 12, wobei der Temperatursensor (16) am stationären Gleitring angeordnet ist.

14. Maschine umfassend
- ein rotierendes Bauteil (22),
- eine Gleitringdichtungsanordnung (1) nach einem der vorhergehenden Ansprüche, und
- eine Steuereinheit (102), wobei die Steuereinheit (102) zur Steuerung der Maschine eingerichtet ist, und
- wobei die Auswerteeinheit (61) eingerichtet ist, Betriebsgrößen der elektrischen Maschine zu erhalten und in Verbindung mit den elektrischen Messgrößen der Messeinheit (60) eine Überwachung der Gleitringdichtungsanordnung (1) auszuführen.

15. Maschine nach Anspruch 14, wobei die Auswerteeinheit (61) eingerichtet ist, Vergleichsergebnisse an die Steuereinheit (102) der Maschine zu übertragen und die Steuereinheit (102) eingerichtet ist, basierend auf den Vergleichsergebnissen Betriebsgrößen der Maschine (100) zu ändern.

## Claims

1. Mechanical seal arrangement configured for sealing at a rotating component (22), comprising:
- a mechanical seal (2) having a rotating slide ring (3) having a sliding surface (3a) and a stationary slide ring (4) having a sliding surface (4a), which define a sealing gap (5) between the sliding surfaces (3a, 4a),
- wherein the rotating slide ring (3) and the stationary slide ring (4) are produced from an electrically conductive material,
- wherein the rotating slide ring (3) is electrically connected to the rotating component (22), and
- a monitoring device (6) comprising an electrical circuit (7), a measuring unit (60) and an evaluation unit (61),
- wherein the electrical circuit (7) comprises a first line (71) which electrically connects the stationary slide ring (4) to a voltage source (70), a second line (72) which electrically connects the rotating component (22) to the voltage source (70), and a capacitor (73),
- wherein the capacitor (73) is configured as a plate capacitor, wherein the plate capacitor is formed by the rotating slide ring (3) and the stationary slide ring (4),
- wherein the measuring unit (60) is configured to acquire changes of electrical variables of the electrical circuit (7), and
- wherein the evaluation unit (61) is configured to perform an evaluation of the electrical variables acquired by the measuring unit (60).

2. Mechanical seal arrangement according to claim 1, wherein a barrier fluid in the sealing gap (5) is a dielectric.

3. Mechanical seal arrangement according to either of the preceding claims, wherein at least one of the sliding surfaces (3a, 4a) of the slide rings (3, 4) comprises an electrically non-conductive coating (13, 14; 15).

4. Mechanical seal arrangement according to any of the preceding claims, wherein an electrically non-conductive element is arranged between the stationary slide ring (4) and a housing (10), for electrical insulation.

5. Mechanical seal arrangement according to claim 4, wherein the electrically non-conductive element is an electrically non-conductive coating (12).

6. Mechanical seal arrangement according to any of the preceding claims, further comprising a torque transmission device (41) which is arranged between the stationary slide ring (4) and the housing (10), wherein the torque transmission device (41) is electrically insulated with respect to the stationary slide ring (4) and/or with respect to the housing (10).

7. Mechanical seal arrangement according to any of the preceding claims, further comprising a pretensioning device (8) and a pressure ring (9), which are arranged on a rear side (4b) of the stationary slide ring (4), wherein the pretensioning device (8) preloads the stationary slide ring (4) in the axial direction (X-X), and wherein the pressure ring (9) is produced from an electrically non-conductive material, in order to electrically insulate the pretensioning device (8) relative to the stationary slide ring (4).

8. Mechanical seal arrangement according to any of the preceding claims, wherein the stationary slide ring (4) comprises an electrically non-conductive coating (15) in full on all outer surfaces.

9. Mechanical seal arrangement according to any of the preceding claims, wherein the evaluation unit (61) is furthermore configured for identifying deviations by a comparison of the electrical measured variables acquired by the measuring unit (60) with comparison variables.

10. Mechanical seal arrangement according to any of the preceding claims, wherein the evaluation unit (61) is furthermore configured for determining a magnitude of the sealing gap (5) in the axial direction (X-X) during operation, on the basis of the acquired electrical measured variables of the measuring unit (60).

11. Mechanical seal arrangement according to any of the preceding claims, further comprising a temperature sensor (16) which is connected to the evaluation unit (61) and is configured for acquiring a temperature of at least one slide ring.

12. Mechanical seal arrangement according to claim 11, wherein the evaluation unit (61) is configured to determine a change in a sealing gap magnitude between the sliding surfaces based on a temperature change of the slide ring.

13. Mechanical seal arrangement according to either claim 11 or claim 12, wherein the temperature sensor (16) is arranged on the stationary slide ring.

14. Machine, comprising
- a rotating component (22),
- a mechanical seal arrangement (1) according to any of the preceding claims, and
- a control unit (102), wherein the control unit (102) is configured for controlling the machine, and
- wherein the evaluation unit (61) is configured for obtaining operating variables of the electrical machine and for performing monitoring of the mechanical seal arrangement (1) in conjunction with the electrical measured variables of the measuring unit (60).

15. Machine according to claim 14, wherein the evaluation unit (61) is configured for transmitting comparison results to the control unit (102) of the machine, and the control unit (102) is configured for changing operating variables of the machine (100) based on the comparison results.

## Revendications

1. Ensemble joint à bague coulissante, configuré pour assurer l'étanchéité sur un composant rotatif (22), comprenant :
- un joint à bague coulissante (2) avec une bague coulissante rotative (3) avec une surface coulissante (3a) et une bague coulissante fixe (4) avec une surface coulissante (4a), qui définissent une fente d'étanchéité (5) entre les surfaces coulissantes (3a, 4a),
- dans lequel la bague coulissante rotative (3) et la bague coulissante fixe (4) sont fabriquées à partir d'un matériau électriquement conducteur,
- dans lequel la bague coulissante rotative (3) est connectée électriquement au composant rotatif (22), et
- un appareil de surveillance (6) avec un circuit électrique (7), une unité de mesure (60) et une unité d'évaluation (61),
- dans lequel le circuit électrique (7) comprend une première ligne (71) qui connecte électriquement la bague coulissante fixe (4) à une source de tension (70), une seconde ligne (72) qui connecte électriquement le composant rotatif (22) à la source de tension (70), et un condensateur (73),
- dans lequel le condensateur (73) est réalisé en tant que condensateur à plaques, dans lequel le condensateur à plaques est réalisé par la bague coulissante rotative (3) et la bague coulissante fixe (4),
- dans lequel l'unité de mesure (60) est configurée pour détecter des changements de grandeurs électriques du circuit électrique (7), et
- dans lequel l'unité d'évaluation (61) est configurée pour mettre en œuvre une évaluation des grandeurs électriques détectées par l'unité de mesure (60).

2. Ensemble joint à bague coulissante selon la revendication 1, dans lequel un fluide de blocage dans la fente d'étanchéité (5) est un diélectrique.

3. Ensemble joint à bague coulissante selon l'une quelconque des revendications précédentes, dans lequel au moins l'une des surfaces coulissantes (3a, 4a) des bagues coulissantes (3, 4) présente un revêtement électriquement non conducteur (13, 14 ; 15).

4. Ensemble joint à bague coulissante selon l'une quelconque des revendications précédentes, dans lequel un élément électriquement non conducteur est disposé entre la bague coulissante fixe (4) et un boîtier (10) pour l'isolation électrique.

5. Ensemble joint à bague coulissante selon la revendication 4, dans lequel l'élément électriquement non conducteur est un revêtement électriquement non conducteur (12).

6. Ensemble joint à bague coulissante selon l'une quelconque des revendications précédentes, comprenant en outre un dispositif de transmission de couple (41) qui est disposé entre la bague coulissante fixe (4) et le boîtier (10), dans lequel le dispositif de transmission de couple (41) est électriquement isolé par rapport à la bague coulissante fixe (4) et/ou par rapport au boîtier (10).

7. Ensemble joint à bague coulissante selon l'une quelconque des revendications précédentes, comprenant en outre un appareil de précontrainte (8) et une bague de pression (9), qui sont disposés sur une face arrière (4b) de la bague coulissante fixe (4), dans lequel l'appareil de précontrainte (8) précontraint la bague coulissante fixe (4) dans la direction axiale (X-X), et dans lequel la bague de pression (9) est fabriquée dans un matériau électriquement non conducteur pour isoler électriquement l'appareil de précontrainte (8) par rapport à la bague coulissante fixe (4).

8. Ensemble joint à bague coulissante selon l'une quelconque des revendications précédentes, dans lequel la bague mécanique fixe (4) présente entièrement sur toutes les surfaces extérieures un revêtement électriquement non conducteur (15) .

9. Ensemble joint à bague coulissante selon l'une quelconque des revendications précédentes, dans lequel l'unité d'évaluation (61) est en outre configurée pour constater des écarts par une comparaison des grandeurs de mesure électriques détectées par l'unité de mesure (60) avec des grandeurs de comparaison.

10. Ensemble joint à bague coulissante selon l'une quelconque des revendications précédentes, dans lequel l'unité d'évaluation (61) est en outre configurée pour déterminer une hauteur de la fente d'étanchéité (5) dans la direction axiale (X-X) à partir des grandeurs de mesure électriques détectées de l'unité de mesure (60) en fonctionnement.

11. Ensemble joint à bague coulissante selon l'une quelconque des revendications précédentes, comprenant en outre un capteur de température (16) qui est connecté à l'unité d'évaluation (61) et est configuré pour détecter une température d'au moins une bague coulissante.

12. Ensemble joint à bague coulissante selon la revendication 11, dans lequel l'unité d'évaluation (61) est configurée pour déterminer une modification d'une hauteur de fente d'étanchéité entre les surfaces coulissantes sur la base d'une variation de température de la bague coulissante.

13. Ensemble joint à bague coulissante selon la revendication 11 ou 12, dans lequel le capteur de température (16) est disposé sur la bague coulissante fixe.

14. Machine comprenant
- un composant rotatif (22),
- un ensemble joint à bague coulissante (1) selon l'une quelconque des revendications précédentes, et
- une unité de commande (102), dans laquelle l'unité de commande (102) est configurée pour commander la machine, et
- dans laquelle l'unité d'évaluation (61) est configurée pour recevoir des grandeurs de fonctionnement de la machine électrique et pour mettre en œuvre une surveillance de l'ensemble joint à bague coulissante (1) en liaison avec les grandeurs de mesure électriques de l'unité de mesure (60).

15. Machine selon la revendication 14, dans laquelle l'unité d'évaluation (61) est configurée pour transmettre des résultats de comparaison à l'unité de commande (102) de la machine et l'unité de commande (102) est configurée pour modifier des grandeurs de fonctionnement de la machine (100) sur la base des résultats de comparaison.
